# EUROPÄISCHE PATENTSCHRIFT

(11) **EP 0 974 757 B1**
(45) Veröffentlichungstag und Bekanntmachung des Hinweises auf die Patenterteilung: **07.11.2001**
(21) Anmeldenummer: 99113676.3
(22) Anmeldetag: 15.07.1999
(51) Int. Cl.: F16B 5/06, B60R 21/20

(54) **Befestigungsvorrichtung für flächige Bauteile**
Fastening device for flat components
Dispositif de fixation pour éléments plats

(30) Priorität: 16.07.1998 DE 29812707 U
(43) Veröffentlichungstag der Anmeldung: 26.01.2000
(73) Patentinhaber: TRW Automotive Safety Systems GmbH & Co. KG, 63743 Aschaffenburg (DE)
(72) Erfinder: Vetter, Johannes, 63846 Laufach (DE); Tracht, Michael, 85049 Ingolstadt (DE)
(74) Vertreter: Degwert, Hartmut, Dipl.-Phys.

(56) Entgegenhaltungen:
- DE-A- 3 245 056
- DE-C- 824 444
- DE-U- 1 916 649
- US-A- 3 864 789
- US-A- 3 893 211

## Beschreibung

Die Erfindung betrifft eine Vorrichtung zur Befestigung eines ersten, flächigen Bauteils an einem dazu parallel angeordneten, zweiten flächigen Bauteil unter Verwendung einer Federklammer.

Federklammern werden allein oder zusammen mit anderen Befestigungselementen in vielfacher Form zur Verbindung von Bauteilen verwendet. Sie bestehen meist aus Federstahl oder einem hochfesten, elastischen Material und sind im allgemeinen so geformt, daß sie innerhalb eines elastischen Spielraums zwei unterschiedliche Endformen annehmen können, von denen die eine der Montage- bzw. Demontagefunktion entspricht und die andere der Befestigungsfunktion. Vielfach werden die Materialeigenschaften der Federklammer nicht nur dazu benutzt, eine formschlüssige Verbindung zwischen zwei Bauteilen herzustellen, sondern auch dazu, zusätzlich oder ausschließlich eine kraftschlüssige Verbindung herzustellen.

So ist beispielsweise aus der DE 3303254 A1 ein Schnellverschluß zur Verbindung zweier mit koaxialen Bohrungen versehener Bauteile bekannt geworden, bei dem das eigentliche Befestigungselement eine U-förmige Federklammer und einen besonders geformten Bolzen umfaßt. Die Federklammer ist durch eine Montageöffnung des einen Bauteils hindurch steckbar und mittels nach außen vorstehender Zungen an diesem Bauteil zu befestigen. Auf dieses erste Bauteil kann unter Zwischenschaltung einer elastischen Dichtung ein zweites Bauteil so aufgelegt werden, daß dessen Bohrung koaxial zu der Bohrung im unteren Bauteil bzw. in der Federklammer liegt. Sodann muß von oben der Bolzen eingeführt werden, wobei die Federklammer gespreizt wird und nach Drehung des Bolzens um 90° in eine Raststellung zurückfedert. Dabei werden die Bauteile in Montagerichtung von der Federklammer gegeneinandergedrückt, während der in die Bohrungen eingesetzte Bolzen die Kräfte in einer Ebene senkrecht zur Montagerichtung überträgt. Da die Federklammer von außen nicht sichtbar ist, kann man nicht erkennen, ob sie in der vorgesehenen Position angeordnet ist und ob mit der Drehung des Bolzens um 90° tatsächlich die gewünschte Fixierungsposition und nicht etwa die Löseposition eingestellt wird. Auch bei Zwischenpositionen kann die Befestigungsfunktion der bekannten Vorrichtung fraglich sein.

Eine ähnliche Befestigungsvorrichtung ist aus der GB 1465262 A bekannt geworden, wobei außer einer Federklammer und einem Sicherungsbolzen aber noch weitere Bauteile zu dem Befestigungselement gehören, das daher wesentlich aufwendiger und teurer ist als der zuvor beschriebene Schnellverschluß. Auch aus der EP 0662559 A1 ist eine Verschlußeinrichtung zum lösbaren Verbinden zweier Bauteile bekannt geworden, bei der eine Federklammer benutzt wird, die aber ebenfalls mehrteilig und daher aufwendiger ist als der Schnellverschluß, bei dem lediglich eine Federklammer und ein Bolzen erforderlich sind.

Alle genannten Befestigungsvorrichtungen sind darüber hinaus kaum brauchbar, wenn es darum geht, zwei flächige Bauteile mit nur einem einzigen Befestigungselement so zu verbinden, daß diese in Montagerichtung mit erheblichen Kräften belastet werden können und in einer Ebene senkrecht dazu eine paßgenaue und dauerhafte Fixierung der beiden Bauteile gegeneinander gewährleisten können.

Der Erfindung liegt daher die Aufgabe zugrunde, eine Vorrichtung der eingangs genannten Art so weiterzubilden, daß zwei flächige Bauteile sicher und formstabil miteinander verbunden werden können und daß man mit einem einzigen Befestigungselement auskommen kann.

Zur Lösung dieser Aufgabe wird erfindungsgemäß vorgeschlagen, daß das zweite Bauteil eine rechteckige Ausnehmung aufweist, in die das erste Bauteil mit zwei einander gegenüberliegenden, abgewinkelten, flächigen Materialabschnitten eingreift, in denen parallel zum zweiten Bauteil verlaufende, schlitzartige Aussparungen ausgebildet sind, und daß eine im Querschnitt U-oder V-förmige Federklammer mit nach außen abgewinkelten Flanschen vorgesehen ist, die zwischen die Materialabschnitte einführbar und am ersten Bauteil abstützbar ist und deren abgewinkelte Flansche sich in der Montageendstellung durch die schlitzartigen Aussparungen hindurch erstrecken und das zweite Bauteil hintergreifen.

Der Erfindung liegt der Gedanke zugrunde, durch entsprechende Formgebung der beteiligten flächigen Bauteile dafür zu sorgen, daß die sogenannten Nebenkräfte, d.h. die Kräfte, die in einer Ebene senkrecht zur Montagerichtung des Befestigungselementes übertragen werden müssen, von den Bauteilen selbst übertragen werden können und daß das Befestigungselement nur noch dafür sorgen muß, daß die beiden Bauteile in Montagerichtung gegeneinander angedrückt werden und daß in dieser Richtung erhebliche Kräfte, die das Abtrennen der Bauteile voneinander bewirken würden, übertragen werden können.

Vielfach sind die Montagebedingungen derart, daß die Rückseite des einen der miteinander zu verbindenden Bauteile nicht zugänglich ist, so daß eine Lageänderung von an der Befestigungsvorrichtung beteiligten Bauelemente nicht mehr möglich ist und daß daher häufig eine gewisse Unsicherheit besteht, ob die gewünschte Verbindung zwischen den beiden Bauteilen tatsächlich hergestellt wurde. So werden beispielsweise Airbagmodule in das Armaturenbrett, den Fahrer- und/oder Beifahrersitz und in die Kraftfahrzeugtüren eingebaut, ohne daß man die Befestigung von der Rückseite her kontrollieren kann. Für diese Fälle muß man sicher sein, daß das Befestigungselement die gewünschte Befestigungsendposition erreicht hat und damit eine Verbindung hergestellt ist, die auch den Belastungen bei einem explosionsartigen Aufblasen des Luftsacks standhält. Die erfindungsgemäße Vorrichtung erfüllt alle diese Bedingungen, kommt mit einem einzigen Befestigungselement aus und kann bei Bedarf auch wieder demontiert werden.

Vorteilhafte Ausgestaltungen und Abwandlungen des Erfindungsgedankens sind in den Unteransprüchen 2 bis 13 beschrieben. Weitere Einzelheiten werden anhand der in den Figuren 1 bis 8 dargestellten Ausführungsbeispiele näher erläutert. Es zeigen:
- Fig. 1: einen Blechabschnitt, aus dem eine Federklammer gemäß Fig. 2 und 3 geformt werden kann
- Fig. 2: einen Schnitt durch eine Federklammer in entspanntem Zustand
- Fig. 3: einen Schnitt durch die gleiche Federklammer in gespanntem Zustand
- Fig. 4: einen Schnitt bzw. eine perspektivische Ansicht des Befestigungsbereiches
- Fig. 5: einen Schnitt durch den Befestigungsbereich gemäß Fig. 4 mit eingesetzter Federklammer
- Fig. 6: einen Blechabschnitt für die Herstellung einer Federklammer gemäß Fig. 8
- Fig. 7: einen Schnitt durch den Einbaubereich mit eingesetzter Federklammer
- Fig. 8: eine perspektivische Ansicht der aus dem Blechabschnitt gemäß Fig. 6 hergestellten Federklammer.

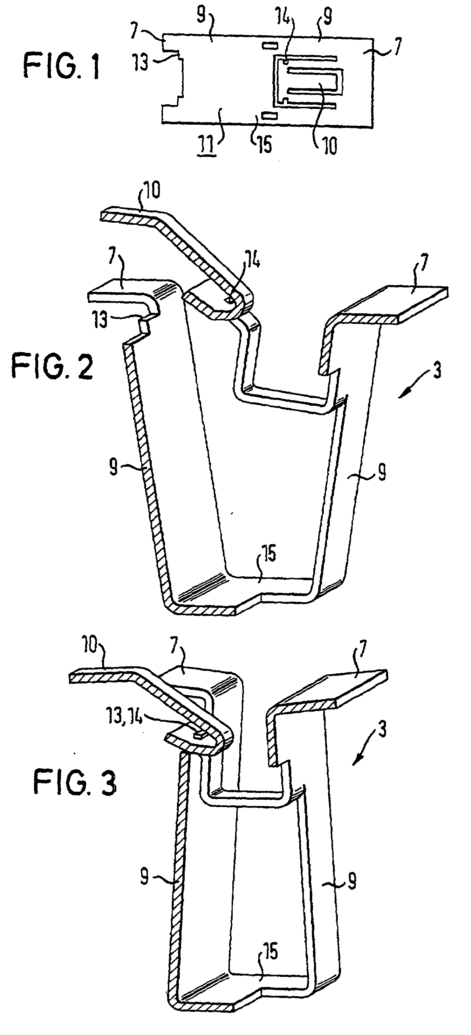

Der Blechabschnitt gemäß Fig. 1 umfaßt einen Basisbereich 15, zwei davon ausgehende Schenkel 9 mit endseitigen Flanschen 7 sowie einen Hebel 10 und Ausnehmungen 14 bzw. Vorsprünge 13, die zusammen eine Einhakvorrichtung bilden, wenn der Blechabschnitt gemäß Fig. 2 durch Abwinkelvorgänge umgeformt ist.

Fig. 2 und 3 sind Schnitte längs der horizontalen Mittellinie des Blechabschnittes gemäß Fig. 1. Ausgehend vom Basisteil 15 sind die Schenkel 9 etwa rechtwinkelig nach oben abgebogen und enden oben in wiederum etwa rechtwinkelig nach außen abgebogene Flansche 7. Aus dem freigestanzten Mittelteil ist durch mehrfaches Abbiegen der Hebel 10 hergestellt, dessen Ende sich oberhalb des linken Flansches 7 befindet, wenn die Federklammer wie in Fig. 2 dargestellt, entspannt ist. Dies ist die Form, die die Federklammer selbsttätig einnimmt, wenn sie nicht, wie in Fig. 3 mittels der Einhakvorrichtung 13, 14 gespannt ist. Bevor die Federklammer 3 als Befestigungselement benutzt werden kann, muß sie in die gespannte Form gemäß Fig. 3 überführt werden, damit sie in die Befestigungsstelle eingeführt werden kann.

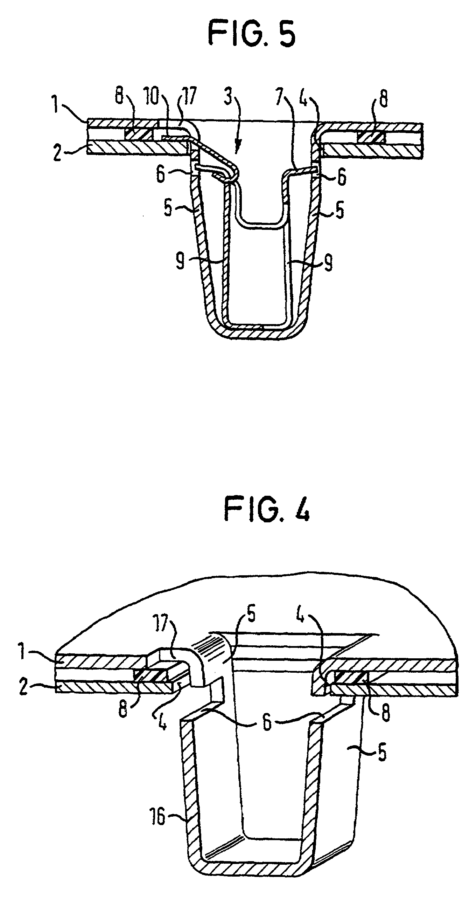

Die eingepaßte Einbausituation ist aus Fig. 4 ersichtlich. Das untere flächige Bauteil 2 besitzt eine vorzugsweise quadratische oder rechteckige Ausnehmung 4, in die zwei einander gegenüberliegende, abgewinkelte, flächige Materialabschnitte 5 des ersten Bauteils eingreifen können. Diese Teile können über ein U-förmiges Basisteil miteinander verbunden sein. Sie besitzen schlitzartige Aussparungen 6 im Bereich unmittelbar unter der unteren Begrenzungsebene des zweiten Bauteils 2. Zwischen den beiden Bauteilen kann ein elastisch verformbares Spannelement 8 angeordnet sein, falls nicht eines der Bauteile oder beide im Befestigungsbereich entsprechend elastisch verformbar ausgebildet sind. Im ersten Bauteil 1 ist im Übergangsbereich zu dem nach unten abgewinkelten, flächigen Materialabschnitt 5 noch ein Fenster 17 zu erkennen, dessen Funktion später erläutert wird.

Aus Fig. 5 ist die Einbausituation der Federklammer 3 kurz vor dem Ausrasten der Einhakvorrichtung 13, 14 ersichtlich. Die Bauteile 1 und 2 sind, wie aus Fig. 4 ersichtlich, ineinandergesteckt, wobei die nach unten abgewinkelten Materialabschnitte 5 des ersten Bauteils 1 in die rechteckige Ausnehmung 4 des zweiten Bauteils 2 eingreifen. Die schlitzartigen Aussparungen 6 liegen dann unmittelbar unterhalb der unteren Begrenzungsebene des zweiten Bauteils 2. Die mittels der Einhakvorrichtung 13, 14 (vergl. Fig. 3) vorgespannte Federklammer 3 kann dann in den Freiraum zwischen den nach unten abgewinkelten Materialabschnitten 5 des ersten Bauteils 1 eingesetzt werden, bis die in Fig. 5 dargestellte Position erreicht ist. Dabei liegt der an der Federklammer 3 ausgebildete Hebel 10 am zweiten Bauteil 2 an, nachdem er das im ersten Bauteil 1 ausgebildete Fenster 17 passiert hat. Wird anschließend die Federklammer 3 weiter nach unten gedrückt, so wird das zwischen den Bauteilen 1 und 2 angeordnete, elastisch verformbare Spannelement 8 zusammengedrückt und der Hebel 10 der Federklammer relativ zu deren linkem Schenkel 9 nach oben bewegt, wodurch die Einhakvorrichtung 13, 14 zum Ausrasten gebracht wird und die Federklammer 3 die in Fig. 2 dargestellte Position einnimmt. Dabei schieben sich die nach außen abgewinkelten Flansche 7 durch die Aussparungen 6 in den flächigen Materialabschnitten 5 hindurch und kommen unterhalb des zweiten Bauteils 2 im Randbereich der rechteckigen Ausnehmung 4 zur Anlage. Damit sind die Bauteile 1 und 2 miteinander verbunden, wobei die Rückstellkräfte des elastisch verformbaren Spannelementes 8 dafür sorgen, daß die Federklammer mit einer gewissen Vorspannung unten am zweiten Bauteil 2 anliegt. Die Rückstellkräfte der Federklammer 3 selbst sorgen dafür, daß die Federklammer 3 die entspannte Position gemäß Fig. 2 einhält.

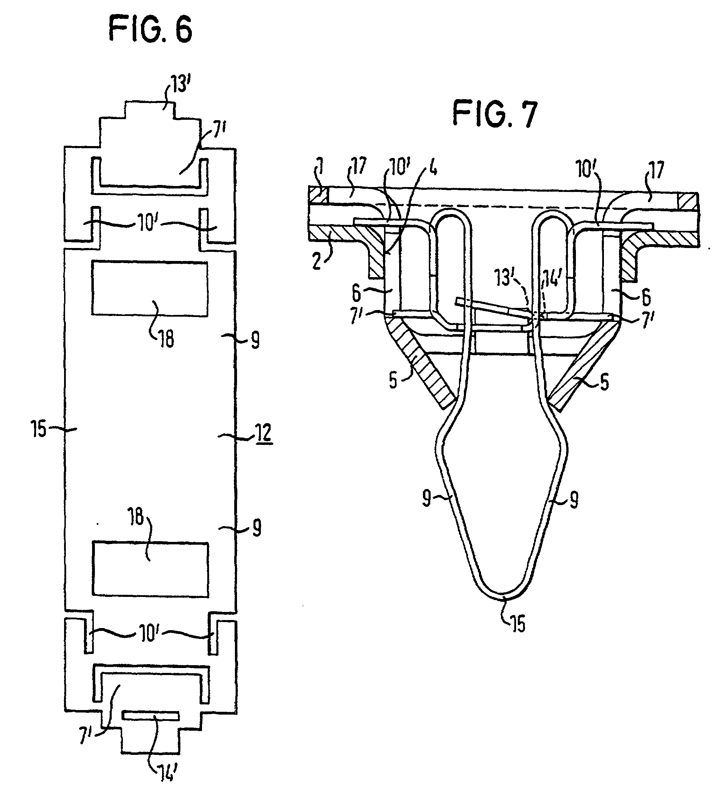

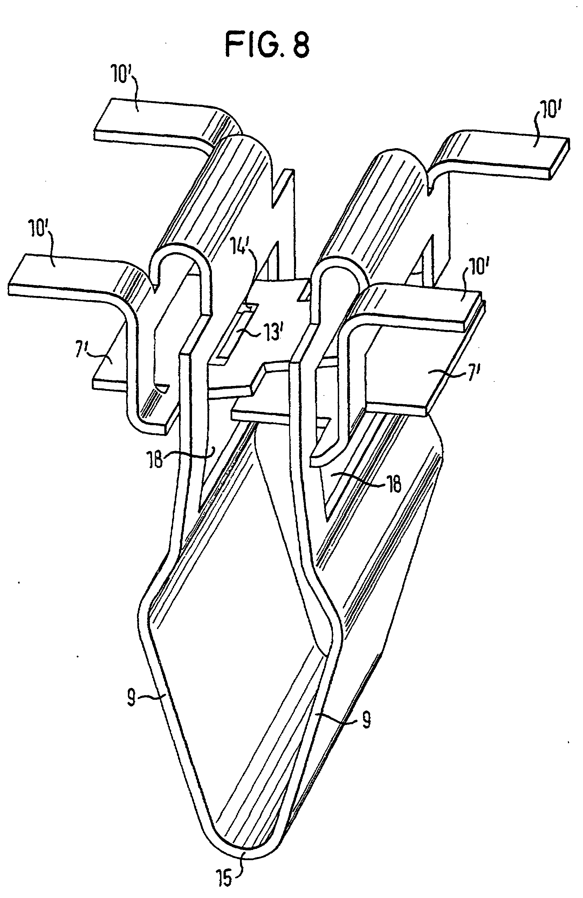

In ähnlicher Weise kann der Blechstreifen 12 gemäß Fig. 6 durch Biegeoperationen in eine Federklammer gemäß Fig. 7 und 8 umgeformt werden, wobei ausgehend von dem Basisteil die Schenkel 9 V-förmig abgebogen sind, anschließend aufeinander zulaufen und schließlich - in gespanntem Zustand - etwa parallel zueinander liegen. Durch weitere Biegeoperationen sind an der Federklammer nach außen weisende Hebel 10' und ebenfalls nach außen weisende Flanschabschnitte 7' ausgebildet. Im Blechabschnitt 12 sind außerdem Fenster 18 vorgesehen, durch die abgewinkelte Teile des Blechstreifens 12 zur Ausbildung einer Einhakvorrichtung 13', 14' hindurchgreifen können. Dabei besteht die Einhakvorrichtung aus einem endseitig nach oben abgewinkelten Teil 13', das bei gespannter Klammerfeder in einen angepaßten Schlitz 14' eingreift. Dies ist am besten aus Fig. 8 ersichtlich, in der die Federklammer in gespanntem Zustand perspektivisch dargestellt ist.

Fig. 7 zeigt die Einbausituation der aus einem Blechstreifen 12 gemäß Fig. 6 geformten und gemäß Fig. 8 vorgespannten Federklammer vor dem Ausrasten der Einhakvorrichtung 13', 14'. In diesem Fall ist der Rand der rechteckigen Ausnehmung 4 im zweiten Bauteil 2 nach unten abgewinkelt und die unteren Enden der abgewinkelten, flächigen Materialabschnitte 5 des ersten Bauteils 1 endseitig V-förmig aufeinander zulaufend ausgebildet. Im ersten Bauteil 1 sind bei dieser Ausführungsform zwei Fenster vorgesehen, durch die hindurch die Hebel 10' auf dem unteren Bauteil 2 zur Anlage kommen können. Wird die Federklammer aus der in Fig. 7 dargestellten Position weiter nach unten durchgedrückt, wobei sich die Hebel 10' am Bauteil 2 abstützen, so wird die Einhakvorrichtung 13' und 14' ausgerastet, und die Federklammer kann ihre gespreizte Position einnehmen, in der die nach außen weisenden Flanschabschnitte 7' durch die schlitzartigen Aussparungen 6 im ersten Bauteil 1 hindurchgreifen können und an dem nach unten abgewinkelten Rand der Ausnehmung 4. des Bauteils 2 zur Anlage kommen. Damit sind die Bauteile 1 und 2 miteinander verbunden.

Die erfindungsgemäße Befestigungsvorrichtung erfüllt alle eingangs genannten Forderungen. Sie ist verwendbar bei nur einseitig zugänglichen Befestigungsstellen, läßt eine Kontrolle der Ausrastposition zu und ermöglicht es, zwei flächige Bauteile mit nur einem Befestigungselement miteinander zu verbinden. Die nach außen abgewinkelten Flansche 7 erlauben die Übertragung sehr großer Auszugskräfte, weil sie einen kurzen, einfachen Verlauf der Kraftlinien zwischen dem ersten und zweiten Bauteil ermöglichen.

## Patentansprüche

1. Vorrichtung zur Befestigung eines ersten, flächigen Bauteils (1) an einem dazu parallel angeordneten, zweiten flächigen Bauteil (2) unter Verwendung einer Federklammer (3), **dadurch gekennzeichnet, daß** das zweite Bauteil (2) eine rechteckige Ausnehmung (4) aufweist, in die das erste Bauteil mit zwei einander gegenüberliegenden, abgewinkelten, flächigen Materialabschnitten (5) eingreift, in denen parallel zum zweiten Bauteil verlaufende, schlitzartige Aussparungen (6) ausgebildet sind, und daß eine im Querschnitt U- oder V-förmige Federklammer (3) mit nach außen abgewinkelten Flanschen (7) vorgesehen ist, die zwischen die Materialabschnitte (5) einführbar und am ersten Bauteil (1) abstützbar ist und deren abgewinkelte Flansche (7) sich in der Montageendstellung durch die schlitzartigen Aussparungen (6) hindurch erstrecken und das zweite Bauteil (2) hintergreifen.

2. Vorrichtung nach Anspruch 1, **dadurch gekennzeichnet, daß** zwischen erstem und zweitem Bauteil (1, 2) wenigstens ein elastisch verformbares Spannelement (8) angeordnet ist, das bei der Herstellung der Befestigung zusammendrückbar ist und das nach erfolgter Befestigung die Flansche (7) der Federklammer (3) permanent gegen das zweite Bauteil (2) andrückt.

3. Vorrichtung nach Anspruch 1 oder 2, **dadurch gekennzeichnet, daß** die Schenkel (9) der Federklammer (3) in vormontiertem Zustand soweit aufeinander zugebogen und in dieser Stellung gegeneinander verriegelt sind, daß die Federklammer (3) mit den nach außen abgewinkelten Flanschen (7) durch die Ausnehmung (4) des zweiten Bauteils (2) hindurch in ihre Montageendposition einführbar ist.

4. Vorrichtung nach Anspruch 3, **dadurch gekennzeichnet, daß** die Federklammer (3) einen Hebel (10) aufweist, der beim Einführen der Federklammer (3) auf dem zweiten Bauteil (2) zur Anlage kommt und dadurch die Schenkel (9) selbsttätig entriegelt.

5. Vorrichtung nach Anspruch 4, **dadurch gekennzeichnet, daß** in wenigstens einem der Materialabschnitte (5) des ersten Bauteils (1) ein Fenster (17) ausgebildet ist, durch das der Hebel (10) auf dem zweiten Bauteil (2) zur Anlage kommen kann.

6. Vorrichtung nach einem der Ansprüche 1 bis 5, **dadurch gekennzeichnet, daß** die Federklammer (3) einstückig aus einem elastischen Blechstreifen (11, 12) hergestellt ist, an dem durch Stanzen und Biegen außer dem U- oder V-förmigen Querschnitt auch eine Einhakvorrichtung (13, 14) ausgebildet ist, mittels derer die Schenkel (9) der Federklammer (3) gegeneinander verriegelbar sind.

7. Vorrichtung nach Anspruch 6, **dadurch gekennzeichnet, daß** die Federklammer (3) im Querschnitt U-förmig ausgebildet ist, wobei die Schenkel (9) endseitig etwa rechtwinklig nach außen abgebogene Flansche (7) aufweisen und in entspanntem Zustand von der Basis (5) zu den Flanschen (7) divergierend und im gespannten Zustand konvergierend verlaufen und wobei in dem einen Schenkel (9) eine sich über den Flansch (7) und den angrenzenden Teil des Schenkels (9) erstreckende Ausnehmung mit hakenartigem Vorsprung (13) ausgebildet ist und durch Stanzschnitte und Abbiegen aus einem Teil der Basis (15) und des anderen Schenkels (9) ein Einhakelement mit randseitigen Schlitzen (14) für die hakenartigen Vorsprünge (13) und mit einem Hebel (10) zum Entriegeln der Schenkel (9) in der Montageendposition geformt ist.

8. Vorrichtung nach Anspruch 6, **dadurch gekennzeichnet, daß** die Federklammer (3) ausgehend vom Basisbereich (15) zunächst im Querschnitt V-förmig und anschließend mit nach innen abgebogenen und schließlich mit etwa geradlinig und in verriegeltem Zustand zueinander parallel verlaufenden Schenkeln (9) ausgebildet ist, wobei die Schenkel (9) endseitig um 180° zurückgebogen und durch Einschneiden und weiteres Umbiegen um 90° mit je zwei nach außen weisenden Hebeln (10') sowie mit ebenfalls nach außen weisenden Flanschabschnitten (7') ausgestattet sind und wobei aus den mittleren Bereichen der Schenkel (9) durch Einschneiden und Umbiegen eine Einhakvorrichtung (13', 14') gebildet ist, die mittels der Hebel (10') in der Montageendposition entriegelbar ist.

9. Vorrichtung nach Anspruch 7 oder 8, **dadurch gekennzeichnet, daß** die Materialabschnitte (5) des ersten Bauteils (1) Teil einer im Querschnitt U- oder V-förmigen, an die Querschnittsform der Federklammer (3) angepaßten, zusammenhängenden Materialausformung (16) sind.

10. Vorrichtung nach Anspruch 9, **dadurch gekennzeichnet, daß** die Federklammer (3) im Basisbereich der Materialausformung (16) mit dem ersten Bauteil (1) fest verbunden ist.

11. Vorrichtung nach einem der Ansprüche 1 bis 10, **dadurch gekennzeichnet, daß** die Federklammer (3) so ausgebildet ist, daß sie beim Einsetzen selbsttätig gespannt und verriegelt wird.

12. Vorrichtung nach einem der Ansprüche 1 bis 10, **dadurch gekennzeichnet, daß** die Federklammer (3) von Hand spannbar und verriegelbar ist.

13. Vorrichtung nach einem der Ansprüche 1 bis 12, **dadurch gekennzeichnet, daß** der Rand der Ausnehmung (4) im zweiten Bauteil (2) durch Umbördeln versteift ist.

## Claims

1. A device for fastening a first flat component (1) to a second flat component (2) arranged parallel thereto, using a spring clip (3), **characterized in that** the second component (2) has a rectangular recess (4) which is engaged by the first component by two opposed, angled flat material sections (5) in which slot-type recesses (6) are configured which extend parallel to the second component, and that a spring clip (3) is provided which has a U- or V-shaped cross-section and outwardly bent flanges (7) and which is insertable between the material sections (5) and supportable on the first component (1), the bent flanges (7) of the spring clip (3) extending in the final assembly position through the slot-type recesses (6) and engaging behind the second component (2).

2. The device as set forth in claim 1, **characterized in that** at least one elastically deformable tensioning element (8) is arranged between the first and second components (1, 2), the tensioning element being compressible during production of the fastening and, once the fastening is completed, permanently presses the flanges (7) of the spring clip (3) against the second component (2).

3. The device as set forth in claim 1 or 2, **characterized in that** the legs (9) of the spring clip (3) in the preassembled condition are bent towards each other to such a degree and so interlocked in this position that the spring clip (3) with the outwardly bent flanges (7) can be introduced through the recess (4) of the second component (2) into its final assembly position.

4. The device as set forth in claim 3, **characterized in that** the spring clip (3) has a lever (10) which, on introduction of the spring clip (3), comes into contact with the second component (2) and thereby automatically unlatches the legs (9).

5. The device as set forth in claim 4, **characterized in that** in at least one of the material sections (5) of the first component (1), a window (17) is formed through which the lever (10) is able to come into contact with the second component (2).

6. The device as set forth in any of the claims 1 to 5, **characterized in that** the spring clip (3) is produced in one piece from an elastic sheet-metal strip (11, 12) on which, in addition to the U- or V-shaped cross-section, a hook-in means (13, 14) is formed by stamping and bending, the legs (9) of the spring clip (3) being adapted to be latched with each other by means of the hook-in means (13, 14).

7. The device as set forth in claim 6, **characterized in that** the spring clip (3) is configured with a U-shaped cross-section, the legs (9) having flanges (7) at their ends bent outwards approximately at right angles, the legs (9) extending divergent in the relaxed condition from the base (5) towards the flanges (7) and convergent in the tensioned condition, and one of the legs (9) having a recess formed therein with a hook-like protuberance (13), the recess extending over the flange (7) and over the adjoining part of the leg (9), and a hook-in element being formed by stamping and bending from a portion of the base (15) and the other leg (9), the hook-in element having rim-sided slots (14) for the hook-like protuberances (13) and having a lever (10) for unlatching the legs (9) in the final assembly position.

8. The device as set forth in claim 6, **characterized in that** the spring clip (3), starting from the base portion (15), is first configured V-shaped in cross-section and subsequently configured with legs (9) bent inwards and finally oriented substantially linearly and, in the latched condition, parallel to each other, the legs (9) being bent back at their ends through 180° and, by cutting and further bending through 90°, being each provided with two outwardly directed levers (10') as well as with likewise outwardly directed flange sections (7'), and a hook-in means (13', 14') being formed from the middle portions of the legs (9) by cutting and bending, the hook-in means being adapted to be unlatched in the final assembly position by means of the levers (10').

9. The device as set forth in claim 7 or 8, **characterized in that** the material sections (5) of the first component (1) are part of a continuous material shaping (16) adapted to the cross-sectional shape of the spring clip (3) and U- or V-shaped in cross-section.

10. The device as set forth in claim 9, **characterized in that** the spring clip (3) is firmly connected to the first component (1) in the base portion of the material shaping (16).

11. The device as set forth in any of the claims 1 to 10, **characterized in that** the spring clip (3) is configured such that it is automatically tensioned and latched in place on insertion.

12. The device as set forth in any of the claims 1 to 10, **characterized in that** the spring clip (3) can be tensioned and latched manually.

13. The device as set forth in any of the claims 1 to 12, **characterized in that** the rim of the recess (4) in the second component (2) is stiffened by crimping.

## Revendications

1. Dispositif de fixation d'un premier composant (1) plat sur un deuxième composant (2) plat agencé parallèlement à celui-ci, en utilisant une attache élastique (3), **caractérisé en ce que** le deuxième composant (2) présente un évidement (4) rectangulaire dans lequel s'engage le premier composant avec deux portions de matériau (5) plates coudées opposées l'une à l'autre, dans lesquelles sont réalisés des dégagements (6) en forme de fentes s'étendant parallèlement au deuxième composant, et **en ce qu'**il est prévu une attache élastique (3) de section en forme de U ou de V avec des brides (7) coudées vers l'extérieur, qui peut être introduite entre les portions de matériau (5) et qui peut prendre appui contre le premier composant (1) et dont les brides (7) coudées s'étendent, dans la position de montage définitive, à travers les dégagements (6) en forme de fentes et saisissent le deuxième composant (2) par l'arrière.

2. Dispositif selon la revendication 1, **caractérisé en ce qu'**entre le premier et le deuxième composant (1, 2) est agencé au moins un élément de tension (8) élastiquement déformable qui est compressible lors de la réalisation de la fixation et qui, une fois la fixation réalisée, presse en permanence les brides (7) de l'attache élastique (3) contre le deuxième composant (2).

3. Dispositif selon la revendication 1 ou 2, **caractérisé en ce qu'**à l'état préassemblé, les branches (9) de l'attache élastique (3) sont repliées l'une vers l'autre et verrouillées l'une par rapport à l'autre dans cette position de telle sorte que l'attache élastique (3) peut être introduite avec les brides (7) coudées vers l'extérieur à travers l'évidement (4) du deuxième composant (2) jusque dans sa position de montage définitive.

4. Dispositif selon la revendication 3, **caractérisé en ce que** l'attache élastique (3) présente un levier (10) qui, à l'introduction de l'attache élastique (3), vient en appui sur le deuxième composant (2) et déverrouille ainsi automatiquement les branches (9).

5. Dispositif selon la revendication 4, **caractérisé en ce que** dans au moins une des portions de matériau (5) du premier composant (1) est réalisée une fenêtre (17) à travers laquelle le levier (10) peut venir en appui sur le deuxième composant (2).

6. Dispositif selon l'une quelconque des revendications 1 à 5, **caractérisé en ce que** l'attache élastique (3) est réalisée d'un seul tenant en une bande de tôle (11, 12) élastique dans laquelle, en plus de la section transversale en forme de U ou de V, un dispositif d'accrochage (13, 14) est aussi réalisé par poinçonnage et par pliage, au moyen duquel les branches (9) de l'attache élastique (3) peuvent être verrouillées l'une contre l'autre.

7. Dispositif selon la revendication 6, **caractérisé en ce que** l'attache élastique (3) est réalisée avec une section transversale en forme de U, les branches (9) présentant aux extrémités des brides (7) repliées approximativement à angle droit vers l'extérieur qui, à l'état détendu, divergent depuis la base (5) vers les brides (7) et, à l'état de tension, s'étendent en convergeant, et dans l'une des branches (9) est réalisé un évidement avec saillie (13) en forme de crochet, qui s'étend sur la bride (7) et la partie adjacente de la branche (9), et un élément d'accrochage avec des fentes (14) de bordure pour les saillies (13) en forme de crochets et avec un levier (10) pour déverrouiller les branches (9) dans la position de montage définitive est formé en découpant par poinçonnage et en pliant une partie de la base (15) et de l'autre branche (9).

8. Dispositif selon la revendication 6, **caractérisé en ce que**, en partant de la zone de base (15), l'attache élastique (3) est réalisée tout d'abord avec une section transversale en forme de V, et ensuite avec des branches (9) pliées vers l'intérieur, et pour finir avec des branches (9) approximativement rectilignes et parallèles l'une à l'autre à l'état verrouillé, les branches (9) étant repliées aux extrémités de 180° et, par entaillage et par pliage poursuivi de 90°, lesdites branches étant équipées chacune avec deux leviers (10') tournés vers l'extérieur et avec des portions de brides (7') également tournées vers l'extérieur, et en entaillant et pliant la zone centrale des branches (9), il est formé un dispositif d'accrochage (13', 14') qui peut être déverrouillé au moyen des leviers (10') dans la position de montage définitive.

9. Dispositif selon la revendication 7 ou 8, **caractérisé en ce que** les portions de matériau (5) du premier composant (1) font partie d'une formation de matériau (16) continue dont la section transversale en forme de U ou de V est adaptée à la forme de section transversale de l'attache élastique (3).

10. Dispositif selon la revendication 9, **caractérisé en ce que** l'attache élastique (3) est reliée de manière solidaire avec le premier composant (1) dans la zone de base de la formation de matériau (16).

11. Dispositif selon l'une quelconque des revendications 1 à 10, **caractérisé en ce que** l'attache élastique (3) est réalisée de telle sorte que lors de sa mise en place, elle est tendue et verrouillée automatiquement.

12. Dispositif selon l'une quelconque des revendications 1 à 10, **caractérisé en ce que** l'attache élastique (3) peut être tendue et verrouillée à la main.

13. Dispositif selon l'une quelconque des revendications 1 à 12, **caractérisé en ce que** le bord de l'évidement (4) dans le deuxième composant (2) est raidi par rabattement.
